Europäisches Patentamt

European Patent Office

Office européen des brevets

(19)

(11) Publication number: **0 171 181 B1**

# EUROPEAN PATENT SPECIFICATION

(12)

(45) Date of publication of patent specification: 06.03.91

(21) Application number: 85304773.6

(22) Date of filing: 04.07.85

(51) Int. Cl.⁵: **B29C 59/16**, B29C 71/04, B29D 7/01, //B29K67:00

(54) Electron-beam adhesion-promoting treatment of polyester film base.

(30) Priority: 05.07.84 US 627812
05.07.84 US 628153
05.07.84 US 628154

(43) Date of publication of application:
12.02.86 Bulletin 86/07

(45) Publication of the grant of the patent:
06.03.91 Bulletin 91/10

(84) Designated Contracting States:
**DE FR GB IT NL**

(56) References cited:
EP-A- 0 010 632        DE-A- 1 494 237
DE-A- 2 457 694        DE-A- 2 855 605
US-A- 3 284 277        US-A- 3 594 458

(73) Proprietor: **MINNESOTA MINING AND MANU-FACTURING COMPANY**
**3M Center, P.O. Box 33427**
**St. Paul, Minnesota 55133-3427(US)**

(72) Inventor: **Sidney, Lu Ann Minnesota Mining and**
**Manufacturing Company 2501 Hudson Road**
**P.O. Box 33427 St. Paul Minnesota 55133(US)**
Inventor: **Kreil, Curtis L. Minnesota Mining and**
**Manufacturing Company 2501 Hudson Road**
**P.O. Box 33427 St. Paul Minnesota 55133(US)**
Inventor: **Evans, Jack L. Minnesota Mining and**
**Manufacturing Company 2501 Hudson Road**
**P.O. Box 33427 St. Paul Minnesota 55133(US)**
Inventor: **Ebner, Stephen R. Minnesota Mining and**
**Manufacturing Company 2501 Hudson Road**
**P.O. Box 33427 St. Paul Minnesota 55133(US)**
Inventor: **Campbell, Karen J. Minnesota Mining and**
**Manufacturing Company 2501 Hudson Road**
**P.O. Box 33427 St. Paul Minnesota 55133(US)**

(74) Representative: **Baillie, Iain Cameron et al**
**c/o Ladas & Parry Isartorplatz 5**
**W-8000 München 2(DE)**

## Description

Field of the Invention

The invention concerns a method of coating a polyester film base (10/20) with a curable organic coating and in another embodiment provides a repeatedly re-usable silicone release liner. By "polyester film base" is meant (1) biaxially-oriented poly(ethylene terephthalate) film obtained from ethylene glycol and dimethyl terephthalate or terephthalic acid and (2) biaxially-oriented films of related polyesters.

Background

Biaxially-oriented poly(ethylene terephthalate) film base has a great many uses because it is rather inexpensive and yet is strong, tough, dimensionally-stable, and resistant to heat. For example, many magnetic recording media comprise a polyester film backing coated with magnetic pigment/binder material. Another use is release liners for adhesive tapes, which liners comprise polyester film coated with silicone release material. However, most coatings do not adhere well unless the polyester film base first receives an adhesion-promoting treatment. There are a variety of such treatments, but for some coatings, no known treatment is fully effective.

Because of its low cost, a leading treatment is corona discharge even though it is only partially effective. Furthermore, because corona discharge treatment is transitory, any coating must be promptly applied to the treated polyester film base. Corona discharge treatment of poly(ethylene terephthalate) film is discussed in an article by Briggs et al: "Surface Modification of Poly(ethylene Terephthalate) by Electrical Discharge Treatment", Polymer, 1980, Vol. 21, August, pages 895-900.

Where better adhesion is demanded, the polyester film base may be chemically treated, such as with para-chlorophenol as in U.S. Patent No. 3,607,354, even though this involves a toxicity hazard. Organic priming or subbing coatings which are less toxic can also significantly enhance adhesion, and can be better adhered to the film base by subjecting the coating to ultraviolet irradiation as taught in U.S. Patents No. 3,188,266 (Charbonneau et al.) and 4,210,703 (Scantlin et al.). Other adhesion-promoting treatments for polyester film base include spark and other electrical discharges, flame, and physical and/or chemical etching.

U.S. Patent NO. 3,955,953 (Graham) concerns promoting adhesion to any solid organic polymeric substrate by subjecting it in the substantial absence of oxygen to charged particle ionizing radiation having an energy of from 15 to 50,000 electron volts. The accelerated particles may be utilized in a vacuum or pass through a window and be utilized in air or a gas. In the Example, cellophane was irradiated in a cathode ray tube, and only the face of the film exposed to the electron beam exhibited the desired improvement in adhesion. The Graham patent suggests that not more than five minutes should elapse before a coating is applied unless the irradiated substrate "is kept in an inert atmosphere such as under nitrogen, argon, helium or the like and/or is stored at a low temperature such as at -80° C" (column 2, lines 1-6).

Japanese Patent Application JA55-160598 (Takada et al.) which was laid open May 26, 1982 concerns the application by vacuum deposition of a magnetizable thin film such as Co/Ni to polyester film. Immediately before applying the magnetizable thin film, the polyester film base is placed in a poly(ethylene terephthalate) tube or bag and subjected to electron-beam radiation having an energy of 2.5 Mev (Examples 1 and 2). Although none of the examples give other conditions of the preirradiation, the final paragraph of the application states that the preirradiation may be conducted in a vacuum container, followed immediately be deposition of the magnetizable thin film to keep the surface of the film base free from moisture and dust. By doing so, the Co/Ni or other magnetizable film is said to adhere better to the polyester film base. See also the claim and the penultimate paragraph immediately preceding Example 1.

It is believed that any known adhesion-promoting treatment of polyester film base which is significantly more expensive or involves hazards or both. Accordingly, the need has continued for a more effective treatment at a cost closer to that of corona discharge.

It is difficult to quantify the effectiveness of a treatment for promoting the adhesion of a coating to polyester film base. One test involves adhering the coating to an article to create a bond between the coating and article which is stronger than the bond between the coating and the film base. The force required to peel apart the film base and the article at 180° is recorded as a measure of how well the coating is adhered. Although peel adhesion is meaningful, it may not precisely indicate the resistance of the coating layer to being removed when rubbed, such as when a magnetic recording layer is drawn across a magnetic recording head. A better indication of adequate adhesion to resist rubbing or abrasion failure has been obtained by testing the resistance of a coating to removal upon being scratched with one's fingernail or rubbed with one's thumb. The edge of a razor blade pressed vertically across relatively moving coating can also provide a good indication of the resistance of the coating to removal when subjected to the sort of rubbing it may encounter in use.

Some silicones which can be used for release liners can be cured by electron-beam irradiation. Among such silicones are the RC series of "TEGO" silicone acrylates sold by Th. Goldschmidt AG of Essen, West Germany. Its trade literature suggests polyester among suitable substrates. However, experiments show that electron-beam curing of a coating of one of those silicones on a polyester film base would not enhance the adhesion of the silicone coating to the film base. Electron-beam irradiation can also be used in the manufacture of magnetic recording media to cure the binder of a magnetizable layer. See, for example, U.K. Patent Applications GB 2,057,471A and GB 2,055,877A of Sony Corp. and PCT Patent application PCT/US81/02176 of Ampex Corp.

Disclosure of Invention

The present invention concerns a method of coating a polyester film base (10/20) with a curable organic coating the adhesion-promoting step of which is free from toxic hazards, and is believed to be at least as effective as is any presently commercial adhesion-promoting step. The adhesion-promoting step is believed to provide the only adhesion-promoting treatment for polyester film base that can simultaneously enhance adhesion of organic coatings to both faces of the film base even though directed toward only one of its faces.

The adhesion-promoting treatment in the method of the invention involves the steps of:

1) continuously passing uncoated polyester film base through an inert atmosphere containing no more than 100 ppm oxygen while exposing the film base to irradiation by an electron beam to subject the film base to an absorbed dosage of at least 0.5 Mrad;

2) exposing the irradiated film base to air at room temperature, and subsequently,

3) applying a curable organic coating to the irradiated film base.

The irradiation promotes the adhesion of an organic coating to at least the face of the film base that faces the electron-beam radiation. The term "uncoated" refers at least to that face of the polyester film base to which said organic coating is to be applied.

By "inert atmosphere" is meant an environment comprising flue gas, nitrogen, or a gas of Group O of the Periodic Table and containing no more oxygen that 100 parts per million. A preferred inert atmosphere is nitrogen. Argon has been shown to be equally useful in practicing the present invention.

Since tests indicate that the effectiveness of the adhesion-promoting treatment does not change during prolonged storage the method of the invention provides that an organic coating may be applied to an adhesion-promoted surface after prolonged storage in air at ordinary room temperatures. Such tests have involved delays of several months.

For treating polyester film base having a thickness range from 25 to 250 micrometers, the electron beam preferably has an accelerating voltage of at least 150 keV, more preferably at least 200 keV. Thinner polyester film base may be effectively treated at lower accelerating voltages, while thicker polyester film base may require higher accelerating voltages to enhance the adhesion of organic coatings to both of its faces.

Optimum results have been obtained at dosages between 1 and 20 Mrad. Below 1 Mrad, the novel method of the invention would be marginally effective. Dosages above 10 Mrad produce little, if any, advantage as compared to lower dosages and also involve the hazard of possibly overheating the film base. This hazard may be reduced by irradiating the film base while in contact with a water-cooled chill roll, but when doing so, adhesion only to the noncontacting face of the film base may be satisfactorily enhanced.

Except when a surface of a polyester film base contacts a metal roll during the adhesion-promoting step, the coating method coats silicone or magnetic pigments to both faces of the film base, except possibly at low accelerating voltages.

Tests to date indicate that the oxygen content of the inert atmosphere should be as low as possible. Excellent adhesion of an organic coating has been realized when the oxygen level of the inert atmosphere was between 10 and 40 parts per million, and the best results have been obtained at the lowest oxygen levels. At the present time it may be unduly expensive to attempt to operate at levels substantially below 5 parts per million.

For economy, the method of the invention preferably is carried out at approximately atmospheric pressure and at web speeds of at least 50 meters per minute. Below 30 meters per minute might be too slow to be commercially feasible.

Because poly(ethylene terephthalate) is believed to be the only presently commercial polyester film base, it has been used in all work on the invention, but equivalent polyester film base should experience the same results.

The method of the invention should be especially useful in the manufacture of (1) flexible magnetic recording media (video tape), (2) pressure-sensitive adhesive tapes, (3) silicone release liners for pressure-sensitive adhesive tapes, (4) abrasive sheeting, (5) photographic, X-ray, and other imaging sheeting, (6) decorative marking films, and (7) retroreflective sheeting. In magnetic recording media and abrasive sheeting, the method of the invention can be used both to adhere a functional coating and also to adhere a backside coating such as is often employed for such purposes as providing increased drive friction or bleeding off static charges. While capital equipment for the method would be far more expensive than is corona discharge equipment, operating costs should be comparable, and the huge size of potential markets should reduce capital costs to a small fraction of operating costs.

In another embodiment repeatedly re-usable silicone release liners obtained by coating polyester film base (10/20) with silicone coating by the method of the invention and curing the silicone coating are provided. In yet another embodiment the silicone of said silicone release liner is a solvent free addition cured silicone.

Brief Description of Drawings

In the drawing:

Figure 1 schematically illustrates apparatus for applying to polyester film base the adhesion-promoting step of the method of the invention; and

Figure 2 schematically illustrates another apparatus for applying the adhesion-promoting step of the method of the invention.

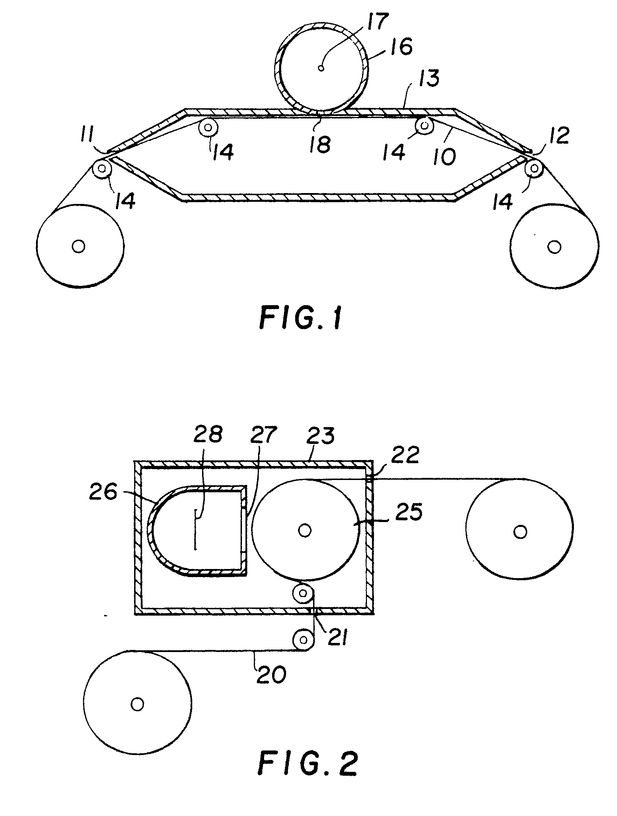

The apparatus shown in Figure 1 is schematically illustrated in greater detail in "Radiation Curing", February 1983, page 30. An essentially identical apparatus is schematically illustrated in "Adhesives Age", December 1982, page 28.

In Figure 1 of the present drawing, a polyester film base 10 is guided by idler rolls 14 through narrow slits 11 and 12 of a chamber 13. The slits serve as exhausts for nitrogen being pumped into the chamber. Mounted over a metallic foil window 18 of the chamber 13 is a vacuum chamber 16 containing a linear filament electron source 17. After being irradiated through the window 18, the film base 10 is wound upon itself into a roll.

In Figure 2, a roll of polyester film base 20 is transported through slits 21 and 22 of a chamber 23 and around a chrome-plated steel chill roll, the film is irradiated through a metallic foil window 27 of an electron-beam apparatus 26 which contains a series of small parallel filaments, one 28 of which is shown.

Detailed Description

In applying this invention to the field of recording media, the magnetizable layers comprise magnetizable particles dispersed in organic binder. The application of a thin magnetizable layer to a face of the polyester film base comprises step (3) described previously.

In the field of silicone release liners, the invention is believed to provide for the first time a repeatedly reusable silicone release liner which has a polyester film base. The invention also is believed to provide for the first time effective adhesion to polyester film base of solvent-free addition-cure silicones. The application of a thin silicone coating to a face of the polyester film base is step (3) described above.

Solvent-free addition-cure silicones comprise a preferred class for release liners because (1) they avoid pollution or solvent-recovery problems and (2) they tend to release more easily from aggressive pressure-sensitive adhesive layers than do other silicones.

The invention has a special application in the manufacture of pressure-sensitive tapes by the process disclosed in U.S. Patent No. 4,181,752 (Martens et al.). In that process, a solvent-free polymerizable composition may be coated onto a polyester film base and subjected to ultraviolet radiation to polymerize the composition to a pressure-sensitive adhesive state. The process requires air to be excluded, and this may be done by temporarily covering the polymerizable coating with a plastic release liner. The method of the invention enables the silicone coating of a silicone release liner to form a strong bond to the polyester film base of the release liner, sufficient to keep the silicone coating form transferring to and contaminating the pressure-sensitive adhesive layer when the silicone release liner is peeled away. Because of its strength and durability, it should be possible to reuse the silicone release liner may times.

Examples 1 - 4

A long roll of biaxially-oriented poly(ethylene terephthalate) film base having a width of 10 cm and a thickness of 75 micrometers was transported at substantially atmospheric pressure at 112 m/min. through apparatus similar to that shown in Figure 1 and equipped with an ESI "Electrocurtain" electron-beam apparatus having a width of 17.8 cm. The distance from the window to the film base was about 2.5 cm. Dry nitrogen containing about 40 parts per million oxygen was forced into the chamber at a rate of 0.36 m³/min. The apparatus was operated at an accelerating voltage of 175 keV to provide absorbed dosage levels of 2, 5, 8 and 10 Mrad.

Onto each face of treated polyester film base, of Example 1, a magnetizable coating was applied by rotogravure from organic solvent and heated to provide a dried layer about 3.6 micrometers in thickness. Each magnetizable layer comprised 66% by weight of acicular iron oxide particles having an average thickness of 0.1 micrometer and an aspect ratio of about 8:1. The binder comprised polyurethane elastomer, phenoxy resin and other ingredients substantially as described in the Comparative Example of U.S. Patent No. 4,210,703.

After the binder had cured, each magnetizable layer of each tape was tested in comparison to otherwise identical tapes except for omission of the electron-beam treatment. In one test (peel adhesion test), each magnetizable layer (on tape specimens 1.3 cm wide) was adhered by room-temperature curing epoxy resin to a rigid aluminum panel (15 cm x 2.5 cm) to create a bond stronger than the bond between the magnetizable layer and the polyester film base. A free end of the tape was clamped in one jaw of an Instron tensile tester, and the aluminum panel was clamped in the other jaw. With the jaws moving apart at 50 cm/min. the force to peel back the tape at 180°, in the lengthwise direction of the panel, was measured.

In another test (razor blade test) the magnetic recording media tapes were placed with their magnetizable layers up over a thin cardboard surface which provides some resilience. A razor blade was lightly pressed at 90° against the layer and then moved in that attitude across about 20 cm while maintaining the light pressure. The medium was then held up to a light and evaluated for adhesion as follows:

| No observable removal | Excellent |
| Isolated removal | Good |
| Removal of patches | Fair |
| Substantially complete removal | Poor |

Test results are indicated in Table A below:

### TABLE A

| Example | Dosage (Mrad) | Razor Blade Test | | Peel Adhesion Test (N/100mm)* | |
| | | Coating on face toward e-beam | Coating on face away from e-beam | Coating on face toward e-beam | Coating on face away from e-beam |
| --- | --- | --- | --- | --- | --- |
| 1 | 2 | good | excellent | 3.2 | 2.3 |
| 2 | 5 | good | excellent | 4.0 | 3.5 |
| 3 | 8 | excellent | excellent | 4.1 | 3.5 |
| 4 | 10 | excellent | excellent | 4.2 | 3.4 |
| Control | 0 | poor | poor | NT | 0.8 |

* Average of three measurements

NT = Not Tested

Each of the tapes made by the inventive process had superior peel adhesion to the Control. Also, each

EP 0 171 181 B1

tape of Examples 1-4 showed far better resistance to removal of the magnetizable layer in the razor blade test, except that tape made after a dosage of 2 Mrad was only marginally better.

The magnetizable layers tested as reported in Table A were applied to polyester film base within a week after the novel adhesion-promoting treatment. Other portions of the film base were stored for several months in air at ordinary room temperatures before being coated. partial testing showed equally good results.

When Examples 1-4 were partially repeated at lower oxygen levels in the nitrogen atmosphere, better scratch resistance and better 180° Peel Adhesion Test results were obtained.

Example 5

Polyester film base identical to that used in Examples 1-4 was transported at substantially atmospheric pressure through the apparatus of Figure 2 at a speed of 30 m/min. with the chill roll maintained at about 8°C. The apparatus included a RPC Industries "Broad-Beam" electron-beam device which has a titanium foil window and contains a series of small parallel filaments and was operated at an accelerating voltage of 200 keV to provide absorbed dosages of 2, 4 and 8 Mrad. Dry nitrogen containing 10 parts per million oxygen was forced into the chamber during the irradiation.

Magnetizable layers were applied to both faces of each film base as in Examples 1-4. The dried thickness of each layer was about 2.5 micrometers. In every case, the magnetizable layers on the face which contacted the chill roll exhibited poor scratch resistance and poor resistance to 180° peel. The other magnetizable layers exhibited better scratch resistance and resistance to 180° peel, with marginal improvement in tape made after a dosage of 2 Mrad. As compared to values reported for Examples 1-4, the peel adhesion values for the layers on the faces toward the beam were lower, probably due in part to their lesser thicknesses.

Examples 6 - 8

A long roll of biaxially-oriented poly(ethylene terephthalate) film base having a width of 10 cm and a thickness of 35 micrometers was transported at 7.6 m/min. through apparatus similar to that shown in Figure 2 and equipped with an ESI "Electrocurtain" electron-beam apparatus having a width of 30.5 cm. Dry nitrogen containing about 20 parts per million oxygen was forced into the chamber at a rate of 0.6 m³/min. The apparatus was operated at an accelerating voltage of 250 keV to provide absorbed dosage levels of 3, 5 and 10 Mrad. Film base so treated, together with a non-irradiated control (0 Mrad), were each coated on one side with a solvent-free addition-cure release silicone which was compounded and applied as follows:

To 100 grams of a vinyl-terminated linear polydimethylsiloxane having a viscosity of 350 cps at 25°C (see, e.g., U.S. Patent No. 4,386,135) was added 0.07 g of a neutralized chloroplatinic acid catalyst containing 15 wt-% platinum (see, e.g., U.S. Patent No. 3,715,334), yielding 100 parts platinum per million parts by weight of polydimethylsiloxane. The catalyzed siloxane was stirred 5 minutes. To it was added 0.25 g of 2-ethylhexyl hydrogen meleate polymerization inhibitor, and the mixture was stirred 15 minutes. Next there was added 2.5 g of a linear polymethylhydroxiloxane crosslinker, available as DC-1107 from Dow Corning Corporation. The resultant blend was stirred 15 minutes, and then coated onto the film base with a 3-roll differential-speed offset-gravure coater, the coating being applied to the side of the film base which faced the electron source during the irradiation step. Curing for 60 seconds at 150°C in a circulating air oven produced an addition-cure silicone release liner from which a pressure-sensitive adhesive layer can be cleanly peeled.

Anchorage to the polyester film base of the silicone coating of each silicone release liner was rated by rubbing vigorously with the thumb. Silicone coatings which could not be removed by such abrasion were given an arbitrary rating of "5"; those which were readily removed were rated "1". Intermediate ratings were assigned to coatings having intermediate levels of resistance to removal. Testing was repeated after storing the silicone release liner in air at ordinary room temperatures for the times indicated in Table B.

EP 0 171 181 B1

TABLE B

| Example | Dosage (Mrad) | Rating | | | | | |
|---|---|---|---|---|---|---|---|
| | | Initial | after storage for | | | | |
| | | | 1 week | 2 weeks | 8 weeks | 14 weeks | 6 months |
| 6 | 3 | 5 | 4 | 4 | 4 | 4 | 4 |
| 7 | 5 | 5 | 4 | 4 | 4 | 4 | 4 |
| 8 | 10 | 5 | 4 | 4 | 3 | 4 | 4 |
| Control | 0 | 5 | 2 | 1 | 1 | 1 | 1 |

A silicone release liner rated below "3" is judged to have insufficient abrasion resistance for practical reuse. It is believed that prior to the present invention, there was no adhesion-promoting treatment for a polyester film base to provide a solvent-free addition cure silicone release liner that would rate 3 or higher after being stored for several weeks in air at ordinary room temperature.

Examples 9 - 14

The process of Examples 6 - 8 was repeated except that part of the polyester film base, after being irradiated, was stored in air at ordinary room temperatures before being coated. The silicone coatings were evaluated by rubbing with the thumb as in Examples 6 - 8 with results noted in Table C.

TABLE C

| Example | Dosage (Mrad) | Coating Delay* | Rating | | | |
|---|---|---|---|---|---|---|
| | | | Initial | after storage for | | |
| | | | | 5 days | 10 days | 17 days |
| 9 | 3 | 20 sec. | 3-4 | 3-4 | 4 | 3 |
| 10 | 3 | 6 days | 4 | 3-4 | 3-4 | 3-4 |
| 11 | 3 | 1 month | 4 | 4 | 4 | 4 |
| 12 | 5 | 20 sec. | 3-4 | 3 | 3 | 3 |
| 13 | 5 | 6 days | 4 | 4 | 4 | 4 |
| 14 | 5 | 1 month | 5 | 4 | 4 | 4 |
| Control | 0 | 20 sec. | 3-4 | 1 | 1 | 1 |
| Control | 0 | 6 days | 4 | 1 | 1 | 1 |
| Control | 0 | 1 month | 4 | 2 | 1 | 1 |

*   The three Controls of Table C are identical to each other, but were coated at the same time as Examples 9, 10 and 11 respectively.  Differences in test values between the three Controls are believed to be due to experimental error.

Example 15

8

The process of Examples 6 - 8 was repeated at an absorbed dosage level of 5 Mrad, except that after curing the silicone coating, an identical silicone coating was applied to the other face of the polyester film base and then cured in the same way, thus producing a double-faced silicone release liner. The coating on each face was rubbed vigorously with the thumb and its resistance to such abrasion was rated from "1' to "5" as in Examples 6-8, both immediately after testing and after storing the silicone release liner at ordinary room temperatures for 18 days. Results are reported in Table D.

TABLE D

| Side of film base | Rating | |
| --- | --- | --- |
| | Initial | After 18 days |
| that faced beam | 4-5 | 4 |
| away from beam | 4-5 | 4 |
| control | 5 | 1-2 |

Examples 16 - 18

Pieces of biaxially-oriented poly(ethylene terephthalate) film base, each having a width of 15 cm, a thickness of 100 micrometers, and a length of approximately 60 cm, were irradiated as in Examples 6-8 except at dosages of 2, 5 and 10 Mrad. Each irradiated piece, along with a non-irradiated control (0 Mrad), was cut into strips 1.3 cm wide by 20 cm long. Onto rigid 2.5 cm x 15 cm aluminum panels was spread a thin coating (about 50 micrometers) of a thermally-curable, two part epoxy resin adhesive. Each strip was laid against a coating with approximately 5 cm of the film overhanging the end of the panel. The edge of a razor blade was scraped across each strip three times to insure good contact to the epoxy adhesive, after which the epoxy coating was allowed to cure for two days at room temperature.

After curing, each aluminum panel was attached to the moving platform of an Instrumentors Slip-Peel tester equipped with a 90° peel testing unit. The overhanging edge of the strip was attached to the force transducer of the instrument. With the platform moving away from the transducer at a rate of 15.2 cm/min, the force required to peel the strip away from the aluminum panel at a 90° angle was recorded. Results are tabulated in Table E.

TABLE E

| Example | Dosage (Mrad) | 90° Peel Adhesion (N/100 mm) |
| --- | --- | --- |
| 16 | 2 | >93 |
| 17 | 5 | >77 |
| 18 | 10 | >100 |
| Control | 0 | 0.8 |

In all cases of the irradiated samples, the force required to separate the strip from the aluminum panel was greater than the strength of the strip itself, resulting in tearing of the film. Therefore, their adhesion was greater than values reported in Table E.

Examples 19 - 23

Pieces of biaxially-oriented poly(ethylene terephthalate) film base, each having a width of 30 cm, thickness of 100 micrometers and length of approximately 60 cm, were irradiated as in Example 4-6 except at dosages of 1, 2, 4, 10 and 20 Mrad. EAch piece, along with a non-irradiated control was knife-coated at a thickness of 50 micrometers with a resin consisting of 70 parts (by weight) of a polyester-urethane acrylate, 29 parts of trimethylene glycol dimethacryalte and 1 part of 2,2-dimethoxy-2-phenylacetophenone photoinitiator. The coatings were cured by passing the samples under two high-pressure mercury lamps in a nitrogen atmosphere.

A 1.3 cm x 20 cm strip was cut out of each sample, and an epoxy adhesive was used to adhere the coated side to a rigid aluminum panel as described in Example 16 - 18. After complete cure of the epoxy adhesive, the panels were subjected to the 90° peel adhesion test described in Examples 16-18. Averages of two tests are reported in Table F.

## TABLE F

| Example | Dosage (Mrad) | 90° Peel Adhesion (N/100 mm) |
|---------|---------------|------------------------------|
| 19 | 1 | 3 |
| 20 | 2 | 34 |
| 21 | 5 | 31 |
| 22 | 10 | 26 |
| 23 | 20 | 42 |
| Control | 0 | 0.5 |

### Examples 24 - 25

Pieces of biaxially-oriented poly(ethylene terephthalate) film base having a width of 15 cm, a thickness of 100 micrometers, and a length of approximately 150 cm, were irradiated as in Examples 6-8 except at dosages of 5 and 10 Mrad. The pieces were cut into 15 x 20 cm sections and dip-coated at 40°C with a mixture consisting of 3 g of emulsion gelatin, 0.4 g of sodium dioctylsulfosuccinate, 0.2 ml of 1 N sodium hydroxide, 3 ml of ethanol, and 47 ml of water. Also dip-coated were a non-irradiated control and conventional photobase which had been subbed with gelatin over a polyvinylidene chloride primer. Each dip-coating was dried overnight at room temperature to a thickness of about 12 micrometers.

Against each dried dip-coating was pressed a 1.9 cm x 10 cm strip of an aggressively pressure-sensitive adhesive tape, leaving a 2 cm pull tab. Using a razor blade, a cut ws made in the dip-coating close to the pull-tab and the tape was quickly pulled away at an angle of about 90°. The coating adhesion was considered to fail if the tape removed any part of the emulsion. Results are reported in Table G.

## TABLE G

| Example | Dosage (Mrad) | Result |
|---------|---------------|--------|
| 24 | 5 | Pass |
| 25 | 10 | Pass |
| Control | 0 | Fail |
| Subbed control | – | Fail |

### Example 26

Biaxially-oriented poly(ethylene terephthalate) film base having a width of 15 cm, a thickness of 100 mcirometers, and a length of 30 cm was irradiated as in Examples 6-8 except at an accelerating voltage of 224 kev to provide a dosage of 5 Mrad. This and a non-irradiated control were cut into 8 cm x 20 cm strips and coated using a wire-wound rod with a mixture of 11.2 g phenol-formaldehyde resin, 4.6 of a synthetic shellac, and 0.25 g of a wetting agent. The coatings were allowed to cure in an oven for two days at approximately 80°C.

The coated samples were cut into 1.3 cm x 20 cm strips and subjected to the 90° peel adhesion test.

the results are reported in Table H.

## TABLE H

| Dosage (Mrad) | Peel Adhesion (N/100 mm) |
|---|---|
| 5 | 10.7 |
| 0 | 2.3 |

When scratched with a blunt spatula, the coating on the non-irradiated control was easily removed; whereas, the coating on the treated sample of this Example 26 was very tightly bound to the film base. Repeated scratching with the spatula would not separate the coating from the film. Ultimately, attempts to remove the coating in this manner resulted in tearing of the polyester film base itself.

Attempts to separate the coatings by flexing the backing fractured and removed the phenolic coating of the control sample and also fractured the coating of the treated sample of this Example 26 but it remained tightly bound to the film base.

## Claims

1. A method of coating a polyester film base (10/20) with a curable organic coating, the method comprising the steps of:
   1) continuously passing uncoated polyester film base through an inert atmosphere containing no more than 100 ppm oxygen while exposing the film base to irradiation by an electron beam to subject the film base to an absorbed dosage of at least 0.5 Mrad;
   2) exposing the irradiated film base to air at room temperature, and subsequently,
   3) applying a curable organic coating to the irradiated film base.

2. A method as claimed in claim 1 wherein said curable organic coating is applied to the polyester film base (10/20) at least six days after the irradiation of step 1).

3. A method as claimed in claim 1 or claim 2 wherein said inert atmosphere contains no more than 40 ppm oxygen.

4. A method as claimed in any of claims 1 to 3 wherein the absorbed dosage is from 1 to 20 Mrad.

5. A method as claimed in any preceding claim wherein the polyester film base (10/20) is at approximately atmospheric pressure during step (1).

6. A method as claimed in any preceding claim wherein the polyester film base (10/20) is unsupported while being irradiated in step 1), whereby the adhesion of organic coatings to both faces of the film base is enhanced.

7. A method as claimed in any preceding claim wherein the electron beam has an accelerating voltage of at least 150 kiloelectron volts.

8. A method as claimed in any preceding claim wherein the polyester film base (10/20) is biaxially oriented polyester.

9. A method as claimed in any preceding claim wherein the organic coating applied in step 3) is an adhesive.

10. A method as claimed in any of claims 1 to 8 wherein the organic coating of step 3) is a magnetizable layer comprising magnetizable particles dispersed in an organic binder.

11. A method as claimed in any of claims 1 to 8 wherein the organic coating of step 3) is a silicone coating.

12. A repeatedly re-usable silicone release liner which is obtainable by coating a polyester film base (10/20) with a silicone coating by a method as claimed in claim 11 and curing the silicone coating.

13. A silicone release liner which is obtainable by coating a polyester film base (10/20) with a silicone coating by a method as claimed in claim 11, said silicone being a solvent-free addition-cure silicone, and curing the silicone coating.

**Revendications**

1. Procédé de revêtement d'un support pelliculaire en polyester (10/20) à l'aide d'un revêtement organique durcissable, comprenant les étapes consistant :
   1) à faire passer en continu le support pelliculaire en polyester, non revêtu, dans une atmosphère inerte contenant au plus 100 ppm d'oxygène, tout en irradiant le support pelliculaire par un faisceau électronique, pour le soumettre à une dose absorbée d'au moins 0,5 Mrad;
   2) à exposer le support pelliculaire irradié à l'air à la température ambiante, puis
   3) à appliquer un revêtement organique durcissable sur le support pelliculaire irradié.

2. Procédé selon la revendication 1, dans lequel ledit revêtement organique durcissable est appliqué sur le support pelliculaire en polyester (10/20) au moins six jours après l'irradiation de l'étape 1).

3. Procédé selon la revendication 1 ou 2, dans lequel ladite atmosphère inerte contient au plus 40 ppm d'oxygène.

4. Procédé selon l'une quelconque des revendications 1 à 3, dans lequel la dose absorbée est de 1 à 20 Mrad.

5. Procédé selon l'une quelconque des revendications précédentes, dans lequel le support pelliculaire en polyester (10/20) est approximativement à la pression atmosphérique ambiante pendant l'étape 1).

6. Procédé selon l'une quelconque des revendications précédentes, dans lequel le support pelliculaire en polyester (10/20) est non supporté pendant qu'il est soumis à l'irradiation de l'étape 1), en vue d'améliorer l'adhérence des revêtements organiques aux deux faces du sup port pelliculaire.

7. Procédé selon l'une quelconque des revendications précédentes, dans lequel le faisceau électronique possède une tension d'accélération d'au moins 150 kev.

8. Procédé selon l'une quelconque des revendications précédentes, dans lequel le support pelliculaire en polyester (10/20) est un polyester à orientation biaxiale.

9. Procédé selon l'une quelconque des revendications précédentes, dans lequel le revêtement organique appliqué dans l'étape 3) est un adhésif.

10. Procédé selon l'une quelconque des revendications 1 à 8, dans lequel le revêtement organique de l'étape 3) est une couche magnétisable comprenant des particules magnétisables dispersées dans un liant organique.

11. Procédé selon l'une quelconque des revendications 1 à 8, dans lequel le revêtement organique de l'étape 3) est un revêtement siliconé.

12. Revêtement anti-adhésif siliconé pouvant être réutilisé d'une manière répétitive, que l'on peut obtenir en appliquant, par un procédé selon la revendication 11, un revêtement siliconé sur un support pelliculaire en polyester (10/20) et en durcissant le revêtement siliconé.

13. Revêtement anti-adhésif siliconé, que l'on peut obtenir en appliquant, par un procédé selon la revendication 11, un revêtement de silicone sur un support pelliculaire en polyester (10/20), ledit silicone étant un silicone sans solvant, durcissable par addition, et en durcissant le revêtement siliconé.

**Ansprüche**

1. Verfahren zum Beschichten eines Schichtträgers (10/20) aus Polyesterfeinfolie mit einem härtbaren organischen Überzug, mit folgenden Schritten:

   1) unbeschichteter Schichtträger aus Polyesterfeinfolie wird kontinuierlich durch eine inerte Atmosphäre geführt, die höchstens 100 ppm Sauerstoff enthält, und dabei wird der Schichtträger aus Feinfolie derart mit einem Elektronenstrahl bestrahlt, daß der Schichtträger aus Feinfolie einer Energiedosis von mindestens 0,5 Mrad ausgesetzt ist;

   2) der bestrahlte Schichtträger aus Feinfolie wird auf Zimmertemperatur befindlicher Luft ausgesetzt; und danach

   3) wird auf den bestrahlten Schichtträger aus Feinfolie ein härtbarer organischer Überzug aufgetragen.

2. Verfahren nach Anspruch 1, dadurch gekennzeichnet, daß der härtbare organische Überzug auf den Schichtträger aus Polyesterfeinfolie (10/20) mindestens sechs Tage nach der Bestrahlung im Schritt 1) aufgetragen wird.

3. Verfahren nach Anspruch 1 oder 2, dadurch gekennzeichnet, daß die inerte Atmosphäre höchstens 40 ppm Sauerstoff enthält.

4. Verfahren nach einem der Ansprüche 1 bis 3, dadurch gekennzeichnet, daß die Energiedosis 1 bis 20 Mrad beträgt.

5. Verfahren nach einem der vorhergehenden Ansprüche, dadurch gekennzeichnet, daß der Schichtträger aus Polyesterfeinfolie (10/20) im Schritt 1 unter ungefähr atmosphärischem Druck steht.

6. Verfahren nach einem der vorhergehenden Ansprüche, dadurch gekennzeichnet, daß der Schichtträger (10/20) aus Poly esterfeinfolie während seiner Bestrahlung im Schritt 1) nicht abgestützt ist, so daß das Haften von organischen Überzügen auf beiden Flächen des Schichtträgers aus Feinfolie verbessert wird.

7. Verfahren nach einem der vorhergehenden Ansprüche, dadurch gekennzeichnet, daß der Elektronenstrahl eine Beschleunigungsspannung von mindestens 150 Kiloelektronenvolt hat.

8. Verfahren nach einem der vorhergehenden Ansprüche, dadurch gekennzeichnet, daß der Schichtträger (10/20) aus Polyesterfeinfolie aus biaxial orientiertem Polyester besteht.

9. Verfahren nach einem der vorhergehenden Ansprüche, dadurch gekennzeichnet, daß der im Schritt 3) aufgetragene organische Überzug ein Klebstoff ist.

10. Verfahren nach einem der Ansprüche 1 bis 8, dadurch gekennzeichnet, daß der im Schritt 3) aufgetragene organische Überzug eine magnetisierbare Schicht ist, die in einem organischen Bindemittel dispergierte magnetisierbare Teilchen enthält.

11. Verfahren nach einem der Ansprüche 1 bis 8, dadurch gekennzeichnet, daß der im Schritt 3) aufgetragene organische Überzug ein Siliconüberzug ist.

12. Wiederholt verwendbare Silicon-Antihaftauflage, die erhalten werden kann, indem ein Schichtträger (10/20) aus Polyesterfeinfolie nach einem Verfahren nach Anspruch 11 mit einem Siliconüberzug beschichtet wird und der Siliconüberzug gehärtet wird.

13. Silicon-Antihaftauflage, die erhalten werden kann, indem ein Schichtträger (10/20) aus Polyesterfeinfolie nach einem Verfahren nach Anspruch 11 mit einem Siliconüberzug beschichtet wird, wobei das Silicon ein lösungsmittelfreies additionshärtbares Silicon ist, und der Siliconüberzug gehärtet wird.

FIG.1

FIG.2